# FASCICULE DE BREVET EUROPEEN

(11) **EP 4 254 286 B1**
(45) Date de publication et mention de la délivrance du brevet: **27.03.2024**
(21) Numéro de dépôt: 23159281.7
(22) Date de dépôt: 01.03.2023
(51) Int. Cl.: G06Q 10/0833, G06Q 50/28, H04L 9/32

(54) **SYSTÈME D'ACHEMINEMENT D'OBJETS CONTENUS DANS DES BOÎTES SUR LESQUELLES SONT PRÉVUS DES MOYENS D'IDENTIFICATION DU DESTINATAIRE**
SYSTEM ZUM VERSAND VON IN SCHACHTELN ENTHALTENEN GEGENSTÄNDEN, AUF WELCHE MITTEL ZUR IDENTIFIZIERUNG DES EMPFÄNGERS BESTIMMT SIND
SYSTEM FOR CONVEYING OBJECTS CONTAINED IN BOXES ON WHICH DESTINATION IDENTIFICATION MEANS ARE PROVIDED

(30) Priorité: 29.03.2022 FR 2202782
(43) Date de publication de la demande: 04.10.2023
(73) Titulaire: PA.COTTE SA, 1009 Pully (CH)
(72) Inventeur: COTTE, Pierre-Alain, 92224 Amberg (DE); COLIN, Jérôme, 49240 Avrillé (FR)
(74) Mandataire: reuteler & cie SA

(56) Documents cités:
- EP-A1- 3 363 336
- CN-A- 107 742 374
- US-A1- 2011 210 135
- KARIMIAN NIMA ET AL: "Evolving authentication design considerations for the Internet of biometric things (IoBT)", 2016 INTERNATIONAL CONFERENCE ON HARDWARE/SOFTWARE CODESIGN AND SYSTEM SYNTHESIS (CODES+ISSS), ACM, 2 octobre 2016 (2016-10-02), pages 1-10, XP033002602,
- Tony Sabetti: "Secure Technology Alliance ©2017 A SECURE TECHNOLOGY ALLIANCE MOBILE COUNCIL WHITE PAPER Mobile Identity Authentication", , 31 mars 2017 (2017-03-31), XP055675492, Extrait de l'Internet: URL:https://www.securetechalliance.org/wp- content/uploads/Mobile-Identity-Authentica tion-WP-FINAL-March-2017.pdf [extrait le 2020-03-10]
- PADMA P ET AL: "A survey on biometric based authentication in cloud computing", 2016 INTERNATIONAL CONFERENCE ON INVENTIVE COMPUTATION TECHNOLOGIES (ICICT), IEEE, vol. 1, 26 août 2016 (2016-08-26), pages 1-5, XP033047196, DOI: 10.1109/INVENTIVE.2016.7823273

## Description

Le domaine de l'invention est celui de la logistique.

Plus précisément, l'invention concerne des méthodes et des techniques de livraison de marchandises par des livreurs en charge de remettre les marchandises à différents destinataires.

Dans le domaine de l'invention, il est classique de recourir à des services de livraison pour expédier des objets à des destinataires identifiés par leur nom et adresse de livraison.

Dans les systèmes logistiques actuels, il est désormais classique de mettre en oeuvre une plateforme informatique incluant une base de données relative aux emballages, listant des codes d'identification pour tous les emballages. La plateforme inclut également une base de données relative aux destinataires des emballages, avec leur adresse de livraison.

En outre, il est désormais aussi répandu, avec les systèmes logistiques actuels, de suivre en temps réel la position des objets à acheminer, pour les situer vis-à-vis de leur point d'arrivée et/ou vis-à-vis des individus dans l'attente de la livraison de l'objet. Dans ce contexte, pour suivre les déplacements des objets à acheminer, les emballages qui les contiennent sont équipés de moyens de géolocalisation et de moyens de communication leur permettant des données relatives à leur localisation. La plateforme informatique dédiée est associée elle aussi à des moyens de communication longue distance pour échanger avec les emballages, ceux-ci étant pourvus d'une intelligence embarquée. On obtient de cette façon un système de traçabilité du cheminement des objets.

En parallèle, le service de livraison (ci-après désigné par le terme de « livreur ») dispose d'une liste des objets à acheminer avec, en correspondance, les noms et adresses des destinataires.

Dans la pratique, une fois le livreur arrivé à l'adresse de livraison, celui-ci se saisit de l'objet à remettre et se rend à la porte de l'adresse de livraison. Il signale alors sa présence soit en utilisant la sonnette, soit en frappant à la porte et attend qu'une personne vienne lui ouvrir. Deux situations peuvent alors se présenter, parmi les plus courantes, à savoir :
- une personne vient ouvrir et est identifiée comme le destinataire de l'objet, auquel cas le livreur remet l'objet et fait signer un bon de livraison ;
- personne ne répond, auquel cas le livreur repart avec l'objet et signale en général son passage par le dépôt d'un bon de passage ;

Dans certains cas, le livreur prendra la responsabilité d'aller solliciter un voisin dans le but de lui demander d'accepter la prise en charge de l'objet et lui faire alors signer le bon de livraison à la place du destinataire prévu.

Selon un autre mode de remise qui s'est largement développé ces dernières années, c'est au destinataire de se rendre sur un lieu de dépôt qui lui a été indiqué pour récupérer son objet.

En tout état de cause, quel que soit le mode de remise, la personne en charge de remettre l'objet au destinataire (ou au supposé destinataire) se doit en théorie de vérifier l'identité de la personne à laquelle il s'apprête à remettre l'objet.

Parmi ces moyens de vérification, on connait notamment :
- la carte d'identité nationale ou le permis de conduire ;
- les codes alphanumériques à envoyer sur application mobile au destinataire, ainsi qu'à la personne du point de dépôt pour vérifier la correspondance avant remise de la marchandise ;

Il reste toutefois possible, pour des personnes mal intentionnées, de falsifier certains documents et/ou de contourner les moyens techniques pour obtenir une marchandise qui ne leur est pas destinée.

Aussi, pour accompagner le développement constant des services de livraison de marchandises, il est nécessaire de renforcer la sécurisation du système de livraison, s'agissant en particulier de s'assurer de l'identité du destinataire.

Le document US2011/0210135A1 fait partie de l'art antérieur.

L'invention a notamment pour objectif de proposer une solution visant à répondre à ce besoin.

Plus précisément, l'invention a pour objectif de proposer un système d'acheminement d'objets mettant en oeuvre des emballages connectés à une plateforme informatique distante, dans lequel la technique de vérification de l'identité du destinataire est infalsifiable ou quasiment.

L'invention a également pour objectif de fournir un tel système d'acheminement d'objets qui permette à un destinataire de désigner, en son absence, un représentant autorisé à prendre en charge la marchandise, avec le même niveau de vérification et de sécurisation.

Ces objectifs, ainsi que d'autres qui apparaitront par la suite, sont atteints grâce à l'invention qui a pour objet un système d'acheminement d'objets, mettant en œuvre :
- des boîtes réutilisables destinés à contenir les objets et associés chacun à au moins un code d'identification, chaque boîte réutilisable intégrant :
   - des moyens de verrouillage électromécaniques dans une position de fermeture de la boîte réutilisable ;
   - des premiers moyens de communication longue distance,
   - une unité informatique embarquée,
- une plateforme informatique incluant une première base de données relative aux boîtes réutilisables listant les codes d'identification de tous les boîtes réutilisables, la plateforme informatique incluant également une deuxième base de données relative à des destinataires des boîtes réutilisables, et incluant des deuxièmes moyens de communication longue distance aptes à communiquer avec les premiers moyens de communication longue distance des boîtes réutilisables,

caractérisé en ce que le système met en oeuvre au moins un dispositif de captation de données biométriques accessible de l'extérieur de la boîte réutilisable, chaque dispositif de captation de données biométriques étant associé à des moyens de communication longue distance,
et en ce que la plateforme informatique est paramétrée pour :
   - recevoir au moins un fichier numérique de données biométriques d'un destinataire par l'intermédiaire du dispositif de captation de données biométriques et des moyens de communication longue distance ,
   - enregistrer, dans la deuxième base de données, le fichier numérique de données biométriques en l'associant audit destinataire,
   - enregistrer ultérieurement une demande de livraison d'une autre boîte réutilisable, dite deuxième boîte réutilisable, à destination d'un destinataire,
   - transmettre le ou les fichiers numériques de données biométriques à l'unité informatique embarquée de la deuxième boîte réutilisable :
      la deuxième boîte portant un dispositif de captation de données biométriques et l'unité informatique embarquée étant paramétrée pour émettre une consigne d'autorisation d'ouverture si le dispositif de captation de données biométriques de la deuxième boîte réutilisable fournit des données conformes à un fichier numérique de données biométriques transmis par la plateforme.

Ainsi, le système d'acheminement d'objets selon l'invention procure un degré de sécurité notablement supérieur aux systèmes de l'art antérieur, s'agissant de vérifier l'identité d'un destinataire de la marchandise.

En effet, le dispositif de captation de données biométriques mis en oeuvre est un outil d'identification très sophistiqué spécialement conçu pour identifier une personne afin de lui donner un accès à un système verrouillé, les lecteurs de données biométriques étant avantageusement de taille réduite et pouvant donc s'intégrer aisément à diverses dimensions de boîtes réutilisables.

On note que, dans un système d'acheminement d'objets selon l'invention, il est mis en oeuvre une flotte de boîtes réutilisables. En d'autres termes, le nombre de boîtes réutilisables mises en oeuvre dans le cadre du système d'acheminement est relativement grand pour satisfaire les besoins en termes de livraisons multiples. De ce fait, il est quasiment impossible qu'une de ces boîtes réutilisables soit utilisée deux fois pour le même destinataire. L'intelligence embarquée de cette boîte réutilisable ne peut donc être utilisée comme support d'enregistrement des données biométriques d'un destinataire.

Le système d'acheminement d'objets selon l'invention propose une solution à cette contrainte, s'agissant d'utiliser la boîte réutilisable utilisée pour une première livraison d'un destinataire donné comme vecteur de transmission des données biométriques du destinataire, ceci aux fins de les transmettre et de les enregistrer au niveau de la plateforme informatique du système.

En d'autres termes, la première boîte reçue par un destinataire utilisant pour la première fois le système d'acheminement d'objets selon l'invention utilise ladite boîte pour compléter et finaliser l'enregistrement de son profil au niveau de la plateforme informatique du système, qui complète la base de données destinataire avec les données biométriques nouvellement reçues en provenance dudit destinataire.

Pour les livraisons ultérieures, la plateforme informatique du système peut donc transmettre à une deuxième boîte réutilisable les données biométriques enregistrées dans la base de données pour un destinataire donné, le dispositif de captation de données biométriques de la deuxième boîte servant cette fois de moyen de vérification (et non plus comme un moyen de transmission des données biométriques à la plateforme comme c'est le cas lorsque le destinataire utilise pour la première fois le système d'acheminement d'objets selon l'invention).

Selon une solution avantageuse, le système comprend un ordiphone détenu par un destinataire, et la plateforme informatique est paramétrée pour émettre un code d'ouverture à destination de l'ordiphone détenu par le destinataire et à destination de l'unité informatique embarquée des boites réutilisables, les boites réutilisables présentant des moyens de saisie du code accessibles de l'extérieur de la boite réutilisable, l'unité informatique embarquée étant paramétrée pour autoriser l'ouverture de la boite réutilisable si le code saisi sur les moyens de saisie du code est identique à celui envoyé par la plateforme à l'unité informatique embarquée.

De cette façon, le système d'acheminement selon l'invention met en oeuvre une procédure de double identification du destinataire pour l'autoriser à accéder au contenu de la boite.

Cette double authentification impose donc au destinataire de fournir deux preuves d'identité de natures différentes afin de pouvoir ouvrir la boite, ceci en combinant mot de passe et reconnaissance biométrique pour une sécurité optimale.

Selon un mode de réalisation particulier, les boites réutilisables portent au moins un dispositif de données biométriques accessible de l'extérieur des boites réutilisables, appartenant au groupe suivant :
- dispositif de captation d'empreintes digitales ;
- dispositif de captation d'image faciale ;
- dispositif de captation d'image d'un iris ;
- dispositif de captation d'image de veines ;
- dispositif d'enregistrement d'une voix.

De tels systèmes d'authentification du destinataire peuvent être utilisé de façon complémentaire ou alternative les uns des autres.

En tout état de cause, de tels systèmes de reconnaissance permettent de sécuriser de façon optimale la livraison et la remise d'une marchandise à un destinataire dans un système d'acheminement selon l'invention.

Selon un autre mode d'authentification, complémentaire ou alternatif des précédents, le système comprend un ordiphone détenu par un livreur, et la plateforme informatique est paramétrée pour transmettre à l'ordiphone détenu par le livreur :
- le fichier numérique de données biométriques;
- une consigne de demande de captation de données biométriques par l'intermédiaire d'une application informatique de captation de données biométriques de l'ordiphone détenu par le livreur ;
- une consigne d'autorisation de livraison si l'application informatique de captation de données biométriques de l'ordiphone détenu par le livreur fournit des données conformes au fichier numérique de données biométriques transmis par la plateforme informatique.

Ainsi, avant même que le destinataire ne s'authentifie par l'intermédiaire du dispositif de captation de données biométriques de la boite contenant la marchandise, le livreur peut, avec le même niveau d'authentification (c'est-à-dire par la vérification des données biométriques digitales du destinataire), procéder à une authentification lui indiquant s'il doit remettre ou non la boite à la personne avec laquelle il est en présence.

Selon une autre possibilité envisageable du système selon l'invention, la plateforme informatique est paramétrée pour recevoir un deuxième fichier numérique de données biométriques d'un représentant du destinataire par l'intermédiaire du dispositif de captation de données biométriques et des premiers moyens de communication longue distance d'une boite réutilisable.

Dans ce cas, la plateforme informatique est paramétrée pour transmettre à l'unité informatique embarquée de la deuxième boite réutilisable :
- le deuxième fichier numérique de données biométriques ;
- une consigne de demande de captation de données biométriques de la deuxième boite réutilisable ;
- une consigne d'autorisation d'ouverture si le dispositif de captation de données biométriques de la deuxième boite réutilisable fournit des données conformes au deuxième fichier numérique de données biométriques transmis par la plateforme informatique.

Selon ce mode de réalisation, il est possible à un destinataire principal de désigner un « représentant », autorisé à prendre en charge la boite et sa marchandise, par exemple en l'absence du destinataire principal.

Plus généralement, le système donne la possibilité à un destinataire qui s'enregistre au niveau de la plateforme de transmettre les données biométriques d'une ou de plusieurs personnes qu'il autorise à recevoir et prendre en charge la boîte réutilisable et son contenu. Cette désignation de personnes autorisées peut être effectuée par le destinataire à la création de son profil lors d'une première utilisation du système, et/ou ultérieurement, au cas par cas, selon ses achats et demandes de livraison, en désignant éventuellement une personne autorisée pour le nouvel achat, voire spécifiquement pour cet achat.

Il est également possible que ce mode de réalisation soit mis en oeuvre pour procéder à une double authentification, cette fois s'agissant d'authentifier deux personnes ensemble pour autoriser l'ouverture de la boite.

Selon une caractéristique complémentaire envisageable, les boites réutilisables présentent un écran numérique, l'unité informatique embarquée des boites réutilisables étant reliée à l'écran numérique pour lui transmettre des consignes d'affichage relatives à des adresses d'expédition, et l'unité informatique embarquée est paramétrée pour autoriser une réception de nouvelles consignes d'expédition si le dispositif de captation de données biométriques de la deuxième boite réutilisable fournit à nouveau des données conformes au fichier numérique de données biométriques transmis par la plateforme informatique.

De cette façon, il est donné la possibilité au destinataire de transmettre des consignes d'adresse d'expédition à l'unité informatique embarquée de la boite qu'il détient. Toutefois, cette transmission de consignes n'est acceptée et/ou prise en compte qu'après authentification du destinataire.

Selon une deuxième approche de l'invention, le système comprend un ordiphone détenu par un destinataire, et cet ordiphone détenu par le destinataire intègre un dispositif de captation de données biométriques, l'ordiphone étant associé à des moyens de communication longue distance aptes à communiquer avec les deuxièmes moyens de communication longue distance.

Les dispositifs de captation de données biométriques des boîtes réutilisables peuvent être utilisés pour compléter le profil des destinataires enregistré par la plateforme.

Alternativement, dans le cadre de cette deuxième approche, les destinataires peuvent, au moment de la création de leur profil sur la plateforme du système, utiliser leur ordiphone, équipé le cas échéant d'un dispositif de de captation de données biométriques, pour transmettre, via les moyens de communication de l'ordiphone, des données biométriques personnelles à la plateforme.

Ce type d'usage peut s'inscrire dans une pratique courant d'achat en ligne. Le fichier de données biométriques est alors bien envoyé à la plateforme et utilisé à l'ouverture par la boîte réutilisable qui l'a reçu, la plateforme ayant transmis ce fichier à la boîte pour authentification du destinataire conformément au principe général de l'invention. Cette solution est élégante pour un achat en ligne : l'acheteur enregistre son empreinte via son ordiphone à la commande, et sait que seul lui pourra l'ouvrir.

D'autres caractéristiques et avantages de l'invention apparaitront plus clairement à la lecture de la description suivante d'un mode de réalisation préférentiel de l'invention, donnée à titre de simple exemple illustratif et non limitatif et du dessin unique annexé, à savoir :

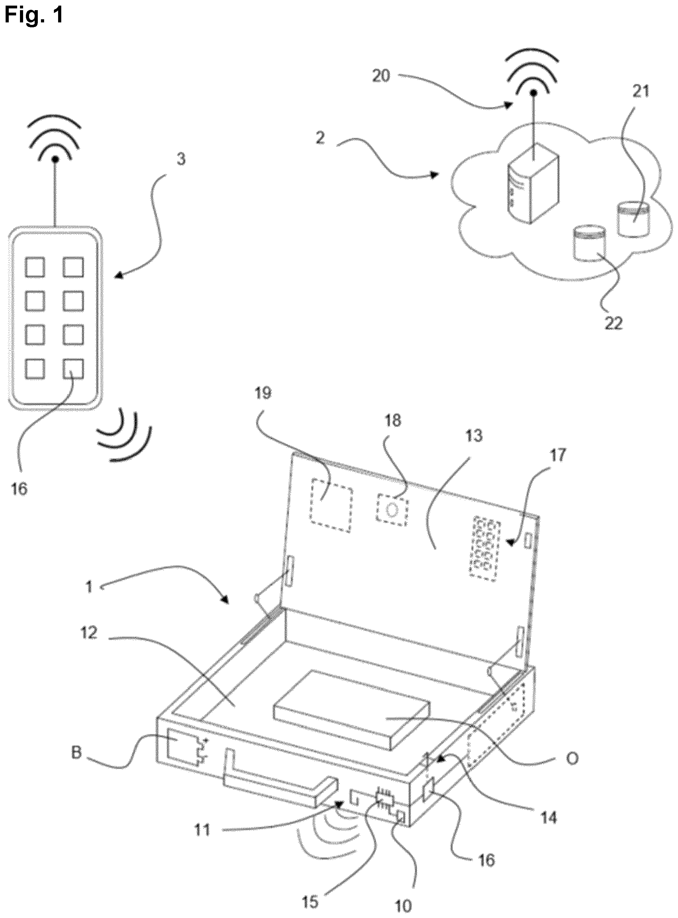

- la figure 1 illustre de façon schématique le principe général d'un système d'acheminement d'objets selon l'invention.

Tel qu'illustré par la figure 1, un système d'acheminement d'objets selon l'invention met en oeuvre :
- des boites réutilisables 1, destinées à contenir des objets O, chacune de ces boites étant associée à un code d'identification 10 ;
- une plateforme informatique 2, à partir de laquelle sont classiquement enregistrées des consignes de livraison, affectées chacune à une des boîtes réutilisables 1 et à un service de livraison et/ou de dépôt.

Dans ce contexte, la plateforme informatique inclut :
- une première base de données 21 relative aux boites réutilisables, listant les codes d'identification 10 de toutes les boites réutilisables 1 ;
- une deuxième base de données 22 relative à des destinataires des boites réutilisables, comprenant des données telles que les nom, prénom, adresse personnelle des destinataires et, tel que cela va être détaillé par la suite, des données d'identification des destinataires.

De plus, chacune des boites réutilisables intègre des premiers moyens de communication 11 longue distance. Pour communiquer avec les boites réutilisables, la plateforme informatique 2 inclut quant à elle des deuxièmes moyens de communication 20 longue distance aptes à communiquer avec les premiers moyens de communication 11 longue distance des boites réutilisables 1.

En outre, chaque boite est constituée classiquement d'un contenant 12 et d'un ouvrant 13 montés mobiles sur le contenant entre une position d'ouverture procurant un accès au volume interne délimité par le contenant et, éventuellement, à l'objet que la boite réutilisable contient. L'ouvrant est en l'occurrence monté pivotant sur le contenant.

De plus, chaque boite réutilisable est équipée de moyens de verrouillage électromécanique 14, destinés à maintenir verrouillée une position de fermeture de l'ouvrant sur le contenant. Dans un système d'acheminement d'objets selon l'invention, chaque boite réutilisable est connectée et intègre pour cela une intelligence embarquée, sous forme d'une unité informatique embarquée 15.

On note que les moyens de verrouillage électromécanique 14 sont pilotés par l'unité informatique embarquée 15, paramétrée pour activer un déverrouillage de la boite réutilisable et commander en conséquence les moyens de verrouillage électromécanique 14 en fonction de consignes d'autorisation qui vont être détaillées par la suite.

Selon le principe de l'invention, le système met en oeuvre au moins un dispositif de captation de données biométriques 16.

Un tel dispositif de captation de données biométriques 16 est accessible de l'extérieur de la boite.

Les composants électriques, électroniques et électromécaniques sont alimentés électriquement par une batterie B.

Selon une première approche de l'invention, ce dispositif de captation de données biométriques 16 utilisé lors d'une première utilisation du système par le destinataire est celui porté par la boîte réutilisable (illustré sur la figure 1 sur un côté du contenant, et pouvant, en fonction des besoins, être présenté sur l'une ou l'autre des façades du contenant, voire sur la façade externe de l'ouvrant 13).

Alternativement, pour permettre au destinataire de transmettre un ou plusieurs fichiers de données biométrique à la plateforme lors d'une première utilisation du système, le destinataire peut recourir à un dispositif de captation de données biométriques 16 intégré à l'ordiphone 3 du destinataire (ou à un autre équipement électronique équivalent).

Selon différents modes de réalisation envisageables, les dispositifs de captation de données biométriques 16 appartiennent au groupe suivant :
- dispositif de captation d'empreintes digitales ;
- dispositif de captation d'image faciale ;
- dispositif de captation d'image d'un iris ;
- dispositif de captation d'image de veines ;
- dispositif d'enregistrement d'une voix.

La captation d'images (faciale, d'iris ou de veines) peut être obtenu à l'aide d'une caméra numérique 18 montée sur une façade extérieure de la boîte.

Les boites réutilisables 1 étant ainsi constituées, lors d'une première utilisation du système d'acheminement d'objets par un destinataire, celui-ci va recevoir une première boite réutilisable après s'être enregistré au niveau de la plateforme informatique 2 pour que celle-ci, bien entendu, gère les consignes d'adresse de livraison de la boite réutilisable et enregistre des paramètres personnalisés relatifs au destinataire dans la deuxième base de données 22.

Selon une première approche du système selon l'invention, dans le cadre de la première utilisation du système d'acheminement d'objet par un destinataire donné, le livreur ou le point de dépôt va identifier, à réception de la première boite réutilisable, le destinataire selon des méthodes classiques de l'art antérieur. Cela étant, en plus de cette identification classique, le livreur et/ou le personnel du point de dépôt va, préalablement à la remise de la boite réutilisable, demander au destinataire d'enregistrer ses données biométriques personnelles à l'aide du dispositif de captation de données biométriques 16 de la boite réutilisable qui lui est présentée.

La prise des données biométriques du destinataire par le dispositif de captation de données biométriques 16 de la boite réutilisable 1 conduit à la génération d'un fichier numérique de données biométriques transmis par la première boite réutilisable 1 à la plateforme informatique 2 par l'intermédiaire des premiers moyens de communication longue distance de la première boite réutilisable et des deuxièmes moyens de communication longue distance de la plateforme informatique. La plateforme informatique est paramétrée en conséquence pour recevoir le fichier numérique de données biométriques et l'enregistrer dans la deuxième base de données, en associant le fichier numérique de données biométriques reçu au destinataire en question.

Par « fichier numérique de données biométriques » issu de la captation, il faut entendre le fichier brut ou retravaillé, mais également toutes les variantes, tel un fichier des caractéristiques intrinsèques à chaque type de données biométriques. Selon une variante, un condensat est obtenu par une fonction de hachage appliqué à un fichier de données biométriques ou à un fichier de caractéristiques intrinsèques. Ce condensat transite par les moyens de communications 20, et est stocké dans la base de données 22. Dans cette variante, c'est alors un premier condensat caractérisant le destinataire, stocké dans la base de données 22 qui est transmis par la plateforme informatique 2, via les moyens de communication 20, à la boîte réutilisable 1. Cette dernière compare le premier condensat caractérisant le destinataire, reçu de la plateforme informatique 2, avec un deuxième condensat qu'elle calcule à partir de la captation des données biométriques du réceptionnaire de la livraison, pour autoriser l'ouverture de la boite réutilisable 1. La fonction de hachage utilisée est une primitive cryptographique connue de l'art antérieur, qui est non inversible et sans collision calculée dans un temps raisonnable. En d'autres termes, la fonction de hachage utilisée pour produire ce condensat, également connu sous les termes d'empreinte ou signature, est choisie dans le panel des fonctions de hachages considérées comme sûres par les agences nationales de sécurité informatique.

Selon une deuxième approche du système selon l'invention, comme évoqué précédemment, lors d'une première utilisation du système, le destinataire peut transmettre à la plateforme des données biométriques par l'intermédiaire d'un ordiphone 3, le cas échéant pourvu d'un dispositif (ou d'une application numérique) de captation de données biométriques, la transmission à destination de la plateforme du ou des fichiers numériques de données biométriques s'effectuant par les moyens de communication longue distance de l'ordiphone.

Ultérieurement à la transmission à la plateforme, et à l'enregistrement par celle-ci des données biométriques, que ce soit par le mode de la première approche ou celui de la deuxième approche, la plateforme informatique est bien entendu paramétrée pour enregistrer une autre demande de livraison pour le même destinataire, donnant lieu à la livraison d'une autre boîte réutilisable, dite deuxième boite réutilisable à destination du destinataire. Dans la pratique, il est bien entendu que les boîtes constituant les « premières boîtes » et celles constituant les « deuxièmes boîtes » sont identiques.

Une deuxième boite est donc affectée à cette deuxième livraison, en étant identifiée par son code d'identification. La plateforme informatique 2, paramétrée en conséquence, transmet alors à l'unité informatique embarquée 15 de la deuxième boite réutilisable le fichier numérique de données biométriques associé au destinataire, et enregistré dans la deuxième base de données 22.

Selon une première variante envisageable, la plateforme informatique 2 est en outre paramétrée pour transmettre à l'unité informatique embarquée 15 de la deuxième boite réutilisable une consigne de demande de captation de données biométriques par l'intermédiaire du dispositif de captation de données biométriques 16 porté par la deuxième boite réutilisable. Ainsi, à réception de la deuxième boîte par le destinataire, celui-ci est informé, par tout moyen envisageable (notification envoyée par la plateforme, message affichée sur la boîte, information délivrée par le livreur...), qu'il doit s'identifier en utilisant le dispositif de captation de données biométriques porté par la deuxième boîte.

Selon une deuxième variante envisageable, le destinataire transmet à la deuxième boîte, par l'intermédiaire par exemple d'une application informatique dédiée, une requête numérique d'identification. L'unité informatique de la deuxième boîte est dans ce cas paramétrée pour recevoir cette requête et notifier au destinataire qu'il peut alors s'identifier par l'intermédiaire du dispositif de captation de données biométriques porté par la deuxième boîte.

Selon l'une ou l'autre des variantes qui viennent d'être décrites, l'unité informatique de la deuxième boîte est paramétrée pour émettre une consigne d'autorisation d'ouverture de la boite réutilisable, et donc de pilotage des moyens de verrouillage 14 par l'unité informatique embarquée de sorte à libérer l'ouverture de l'ouvrant par rapport au contenant, si le dispositif de captation de données biométriques 16 de la deuxième boite réutilisable fournit des données conformes au fichier de données biométriques transmis par la plateforme informatique 2 à l'unité informatique 15 de la boite réutilisable.

On note que les données de captation et un horodatage de celles-ci peuvent être transmis par la deuxième boîte réutilisable, par l'intermédiaire de ses moyens de communication longue distance, à la plateforme.

En particulier, il est envisageable de remonter à la plateforme le fichier de données biométriques capté par la deuxième boite si l'ouverture a été refusée : cela peut permette d'indiquer une personne à ajouter à la deuxième base de données 22 relative aux destinataires base ou de demander un traitement ultérieur.

La plateforme informatique 2 peut en outre être paramétrée pour recevoir un deuxième fichier numérique de données biométriques d'un représentant du destinataire (voire de plusieurs fichiers numériques de données biométriques) par l'intermédiaire du dispositif de captation de données biométriques 16 de la boite réutilisable ou par celui équipant l'ordiphone du destinataire, le fichier étant transmis par l'intermédiaire des premiers moyens de communication longue distance d'une première boite réutilisable, ou par ceux de l'ordiphone, à la façon du fichier numérique de données biométriques du destinataire principal tel que décrit précédemment. Le fichier numérique de données biométriques est traité par la plateforme numérique, paramétrée en conséquence pour recevoir ce fichier numérique, l'enregistrer dans la deuxième base de données.

Selon le même principe que décrit précédemment, la plateforme informatique 2 est alors paramétrée pour transmettre à l'unité informatique embarquée 15 d'une deuxième boite réutilisable :
- le deuxième fichier numérique de données biométriques;
- une consigne de demande de captation de données biométriques par l'intermédiaire du dispositif de captation de données biométriques de la deuxième boite réutilisable ;
- une consigne d'autorisation d'ouverture si le dispositif de captation de données biométriques de la deuxième boite réutilisable fournit des données conformes au deuxième fichier numérique de données biométriques transmis par la plateforme informatique.

Tel qu'illustré par la figure 1, un système d'acheminement d'objets selon l'invention peut prévoir, selon un mode de réalisation particulier, la mise en oeuvre d'un ordiphone 3 détenu par un destinataire.

Dans ce cas, en plus du principe d'authentification par les données biométriques, la plateforme informatique 2 peut être paramétrée pour émettre un code d'ouverture à destination de l'ordiphone 3 détenu par le destinataire, et pour émettre également ce code d'ouverture à destination de l'unité informatique embarquée 15 des boites réutilisables (ou en tout état de cause à destination de l'unité informatique embarquée de la boite réutilisable affectée à la livraison en cours à destination du destinataire concerné).

Selon ce mode de réalisation, les boites réutilisables présentent chacune des moyens de saisie d'un code 17, accessible de l'extérieur de la boite réutilisable.

On comprend que ce mode de réalisation permet d'obtenir une méthode de double identification, avec, d'une part, la prise de données biométriques telle que décrite précédemment et, d'autre part, l'envoi d'un code à destination de l'ordiphone 3 du destinataire, que ce dernier doit saisir à l'identique sur les moyens de saisie du code 17 de la boite réutilisable. L'unité informatique embarquée 15 de la boite réutilisable compare le code saisi par les destinataires avec le code envoyé par la plateforme informatique, et autorise l'ouverture de la boite réutilisable si le code saisi et le code enregistré sont identiques. Les moyens de verrouillage électromécaniques sont pilotés en conséquence par l'unité informatique embarquée de la boite réutilisable.

L'ordiphone 3 peut également être mis en oeuvre dans un système d'acheminement d'objets selon l'invention en étant détenu par un livreur, la plateforme informatique 2 étant alors paramétrée pour transmettre à l'ordiphone 3 du livreur :
- le fichier numérique de données biométriques;
- une consigne de demande de captation de données biométriques par l'intermédiaire d'une application informatique de captation de données biométriques de l'ordiphone détenu par le livreur ;
- une consigne d'autorisation de livraison si l'application informatique de captation de données biométriques de l'ordiphone détenu par le livreur fournit des données conformes au fichier numérique de données biométriques transmis par la plateforme informatique.

Bien entendu, quel que soit la méthode la méthode de captation de données biométriques, la plateforme informatique est dotée de moyens logiciels permettant de comparer des fichiers de données biométriques entre eux.

Dans un système d'acheminement d'objets selon l'invention, il est avantageux d'équiper les boites réutilisables d'un écran numérique 19. L'unité informatique embarquée des boites réutilisables est alors reliée informatiquement à l'écran numérique 19 pour lui transmettre des consignes d'affichage relatives à des adresses d'expédition. Ces données relatives aux adresses d'expédition sont transmises par la plateforme informatique à l'unité informatique embarquée de la boite par l'intermédiaire des premiers et deuxièmes moyens de communication longue distance.

Dans ce contexte, il est également possible de paramétrer l'unité informatique embarquée pour autoriser une réception de nouvelles consignes d'expédition si le dispositif de captation de données biométriques de la deuxième boite fournit à nouveau des données conformes au fichier numérique de données biométriques transmis par la plateforme informatique.

En d'autres termes, il est possible pour le destinataire de la boite réutilisable de réexpédier la boite en la paramétrant avec une nouvelle donnée d'adresse d'expédition, ceci toutefois en s'authentifiant par la méthode d'identification par données biométriques.

## Revendications

1. Système d'acheminement d'objets, mettant en oeuvre :
- des boîtes réutilisables (1) destinés à contenir les objets (O) et associés chacun à au moins un code d'identification (10), chaque boîte réutilisable intégrant :
- des moyens de verrouillage électromécaniques (14) dans une position de fermeture de la boîte réutilisable ;
- des premiers moyens de communication (11) longue distance,
- une unité informatique embarquée (15),
- une plateforme informatique (2) incluant une première base de données (21) relative aux boîtes réutilisables (1) listant les codes d'identification (10) de toutes les boîtes réutilisables, la plateforme informatique (2) incluant également une deuxième base de données (22) relative à des destinataires des boîtes réutilisables, et incluant des deuxièmes moyens de communication (20) longue distance aptes à communiquer avec les premiers moyens de communication (11) longue distance des boîtes réutilisables (1),
**caractérisé en ce que** le système met en oeuvre au moins un dispositif de captation de données biométriques (16) accessible de l'extérieur d'une boîte réutilisable (1), chaque dispositif de captation de données biométriques (16) étant associé à des moyens de communication longue distance aptes à communiquer avec les deuxièmes moyens de communication (20) longue distance,
et **en ce que** la plateforme informatique (2) est paramétrée pour :
- recevoir au moins un fichier numérique de données biométriques par l'intermédiaire du dispositif de captation de données biométriques (16) et des moyens de communication longue distance ,
- enregistrer, dans la deuxième base de données (22), le fichier numérique de données biométriques en l'associant audit destinataire,
- enregistrer ultérieurement une demande de livraison d'une autre boîte réutilisable, dite deuxième boîte réutilisable, à destination dudit destinataire,
- transmettre le ou les fichiers numériques de données biométriques à l'unité informatique embarquée (15) de la deuxième boîte réutilisable,
la deuxième boîte réutilisable portant un dispositif de captation de données biométriques (16) et l'unité informatique embarquée (15) étant paramétrée pour émettre une consigne d'autorisation d'ouverture si le dispositif de captation de données biométriques (16) de la deuxième boîte réutilisable fournit des données conformes au fichier numérique de données biométriques transmis par la plateforme (2).

2. Système d'acheminement d'objets selon la revendication 1, **caractérisé en ce qu'**il comprend un ordiphone (3) détenu par un destinataire et **en ce que** la plateforme informatique (2) est paramétrée pour émettre un code d'ouverture à destination de l'ordiphone (3) détenu par le destinataire et à destination de l'unité informatique embarquée (15) des boîtes réutilisables (1), les boîtes réutilisables (1) présentant des moyens de saisie (17) du code accessibles de l'extérieur de la boîte réutilisable (1), l'unité informatique embarquée (15) étant paramétrée pour autoriser l'ouverture de la boîte réutilisable si le code saisi sur les moyens de saisie du code est identique à celui envoyé par la plateforme informatique (2) à l'unité informatique embarquée (15).

3. Système d'acheminement d'objets selon l'une des revendications 1 et 2, **caractérisé en ce que** les dispositifs de captation de données biométriques (16) appartiennent au groupe suivant :
- dispositif de captation d'empreintes digitales ;
- dispositif de captation d'image faciale ;
- dispositif de captation d'image d'un iris ;
- dispositif de captation d'image de veines ;
- dispositif d'enregistrement d'une voix.

4. Système d'acheminement d'objets selon l'une quelconque des revendications précédentes, **caractérisé en ce qu'**il comprend un ordiphone (3) (détenu par un livreur et **en ce que** la plateforme informatique (2) est paramétrée pour transmettre à l'ordiphone (3) détenu par le livreur :
- le fichier numérique de données biométriques;
- une consigne de demande de captation de données biométriques par l'intermédiaire d'une application informatique de captation de données biométriques de l'ordiphone détenu par le livreur ;
- une consigne d'autorisation de livraison si l'application informatique de captation de données biométriques de l'ordiphone détenu par le livreur fournit des données conformes au fichier numérique de données biométriques transmis par la plateforme.

5. Système d'acheminement d'objets selon l'une quelconque des revendications précédentes, **caractérisé en ce que** la plateforme informatique (2) est paramétrée pour recevoir un deuxième fichier numérique de données biométriques d'un représentant du destinataire par l'intermédiaire du dispositif de captation de données biométriques (16) et des premiers moyens de communication (11) longue distance d'une boîte réutilisable.

6. Système d'acheminement d'objets selon la revendication 5, **caractérisé en ce que** la plateforme informatique (2) est paramétrée pour transmettre à l'unité informatique embarquée (15) de la deuxième boîte réutilisable :
- le deuxième fichier numérique de données biométriques;
- une consigne de demande de captation de données biométriques par l'intermédiaire du dispositif de captation de données biométriques (16) de la deuxième boîte réutilisable ;
- une consigne d'autorisation d'ouverture si le dispositif de captation de données biométriques (16) de la deuxième boîte réutilisable fournit des données conformes au deuxième fichier numérique de données biométriques transmis par la plateforme informatique (2).

7. Système d'acheminement d'objets selon l'une quelconque des revendications précédentes, **caractérisé en ce que** les boîtes réutilisables (1) présentent un écran numérique (19), l'unité informatique embarquée (15) des boîtes réutilisables étant reliée à l'écran numérique pour lui transmettre des consignes d'affichage relatives à des adresses d'expédition,
et **en ce que** l'unité informatique embarquée (15) est paramétrée pour autoriser une réception de nouvelle consigne d'expédition si le dispositif de captation de données biométriques (16) de la deuxième boîte réutilisable fournit à nouveau des données conformes au fichier numérique de données biométriques transmis par la plateforme informatique.

8. Système d'acheminement d'objets selon la revendication 1, **caractérisé en ce qu'**il comprend un ordiphone (3) détenu par un destinataire,
et **en ce que** l'ordiphone (3) détenu par le destinataire intègre un dispositif de captation de données biométriques (16), l'ordiphone étant associé à des moyens de communication longue distance aptes à communiquer avec les deuxièmes moyens de communication (20) longue distance.

## Patentansprüche

1. System zum Versand von Objekten, das verwendet:
- wiederverwendbare Schachteln (1), die bestimmt sind, Objekte (O) zu enthalten und jeweils mindestens einem Identifizierungscode (10) zugeordnet sind, wobei jede wiederverwendbare Schachtel integriert:
- elektromechanische Verriegelungsmittel (14) in einer Verschlussposition der wiederverwendbaren Schachtel;
- erste Long-Distance-Kommunikationsmittel (11),
- eine eingebaute IT-Einheit (15),
- eine IT-Plattform (2), die eine erste Datenbank (21) einschließt, die sich auf die wiederverwendbaren Schachteln (1) bezieht, die die Identifizierungscodes (10) aller wiederverwendbaren Schachteln auflistet, wobei die IT-Plattform (2) ebenfalls eine zweite Datenbank (22) einschließt, die sich auf die Empfänger der wiederverwendbaren Schachteln bezieht und zweite Long-Distance-Kommunikationsmittel (20) einschließt, die imstande sind, mit den ersten Long-Distance-Kommunikationsmitteln (11) der wiederverwendbaren Schachteln (1) zu kommunizieren,
**dadurch gekennzeichnet, dass** das System mindestens eine Vorrichtung zur Erfassung biometrischer Daten (16) verwendet, die von außerhalb einer wiederverwendbaren Schachtel (1) erreichbar sind, wobei jede Vorrichtung zur Erfassung biometrischer Daten (16) Long-Distance-Kommunikationsmitteln zugeordnet ist, die imstande sind, mit den zweiten Long-Distance-Kommunikationsmitteln (20) zu kommunizieren,
und dass die IT-Plattform (2) eingestellt ist, um:
- mindestens eine IT-Datei biometrischer Daten über die Vorrichtung zur Erfassung biometrischer Daten (16) und die Long-Distance-Kommunikationsmittel zu empfangen,
- in der zweiten Datenbank (22) die IT-Datei biometrischer Daten zu speichern und dem Empfänger zuzuordnen,
- später eine Lieferanforderung einer anderen wiederverwendbaren Schachtel, bezeichnet als zweite wiederverwendbare Schachtel, zu speichern, die an einen Empfänger zu liefern ist,
- die IT-Datei(en) biometrischer Daten an die eingebaute IT-Einheit (15) der zweiten wiederverwendbaren Schachtel zu übertragen,
wobei die zweite wiederverwendbare Schachtel eine Vorrichtung zur Erfassung biometrischer Daten (16) trägt und die eingebaute IT-Einheit (15) eingestellt ist, um eine Öffnungsgenehmigungsanweisung zu senden, wenn die Vorrichtung zur Erfassung biometrischer Daten (16) der zweiten wiederverwendbaren Schachtel Daten bereitstellt, die der von der Plattform (2) übertragenen IT-Datei biometrischer Daten entsprechen.

2. System zum Versand von Objekten nach Anspruch 1, **dadurch gekennzeichnet, dass** es ein von einem Empfänger besessenes Smartphone (3) umfasst und dass die IT-Plattform (2) eingestellt ist, um einen Öffnungscode an das von dem Empfänger besessene Smartphone (3) und an die eingebaute IT-Einheit (15) der wiederverwendbaren Schachteln (1) zu senden, wobei die wiederverwendbaren Schachteln (1) Erfassungsmittel (17) des von außerhalb der wiederverwendbaren Schachteln (1) erreichbaren Codes aufweisen, wobei die eingebaute IT-Einheit (15) eingestellt ist, um das Öffnen der wiederverwendbaren Schachtel zu genehmigen, wenn der auf den Erfassungsmitteln des Codes eingegebene Code mit dem identisch ist, der von der IT-Plattform (2) an die eingebaute IT-Einheit (15) gesendet wurde.

3. System zum Versand von Objekten nach einem der Ansprüche 1 und 2, **dadurch gekennzeichnet, dass** die Vorrichtungen zur Erfassung biometrischer Daten (16) zur folgenden Gruppe gehören:
- Vorrichtung zur Erfassung digitaler Fingerabdrücke;
- Vorrichtung zur Gesichtserfassung;
- Vorrichtung zur Iriserfassung;
- Vorrichtung zur Erfassung von Venen;
- Vorrichtung zur Stimmaufzeichnung.

4. System zum Versand von Objekten nach einem der vorangehenden Ansprüche, **dadurch gekennzeichnet, dass** es ein Smartphone (3) umfasst, das im Besitz eines Zustellers ist und dass die IT-Plattform (2) eingestellt ist, um an das Smartphone (3), das im Besitz des Zustellers ist, zu übertragen:
- die IT-Datei biometrischer Daten;
- eine Anweisung zur Anforderung der Erfassung biometrischer Daten über eine IT-Anwendung zur Erfassung biometrischer Daten des Smartphones, das im Besitz des Zustellers ist;
- eine Liefergenehmigungsanweisung, wenn die IT-Anwendung zur Erfassung biometrischer Daten des Smartphones, das im Besitz des Zustellers ist, Daten bereitstellt, die der von der Plattform übertragenen IT-Datei biometrischer Daten entsprechen.

5. System zum Versand von Objekten nach einem der vorangehenden Ansprüche, **dadurch gekennzeichnet, dass** die IT-Plattform (2) eingestellt ist, um eine zweite IT-Datei biometrischer Daten eines Vertreters des Empfängers über die Vorrichtung zur Erfassung biometrischer Daten (16) und die ersten Long-Distance-Kommunikationsmittel (11) einer wiederverwendbaren Schachtel zu empfangen.

6. System zum Versand von Objekten nach Anspruch 5, **dadurch gekennzeichnet, dass** die IT-Plattform (2) eingestellt ist, um an die eingebaute IT-Einheit (15) der zweiten wiederverwendbaren Schachtel zu übertragen:
- die zweite IT-Datei biometrischer Daten;
- eine Anweisung zur Anforderung der Erfassung biometrischer Daten über die Vorrichtung zur Erfassung biometrischer Daten (16) der zweiten wiederverwendbaren Schachtel;
- eine Öffnungsgenehmigungsanforderung, wenn die Vorrichtung zur Erfassung biometrischer Daten (16) der zweiten wiederverwendbaren Schachtel Daten bereitstellt, die der von der IT-Plattform (2) übertragenen zweiten IT-Datei biometrischer Daten entsprechen.

7. System zum Versand von Objekten nach einem der vorangehenden Ansprüche, **dadurch gekennzeichnet, dass** die wiederverwendbaren Schachteln (1) einen digitalen Bildschirm (19) aufweisen, wobei die eingebaute IT-Einheit (15) der wiederverwendbaren Schachteln mit dem digitalen Bildschirm verbunden ist, um an ihn Anzeigeanforderungen zu übertragen, die sich auf Versandadressen beziehen,
und dass die eingebaute IT-Einheit (15) eingestellt ist, um einen Empfang einer neuen Versandanforderung zu gestatten, wenn die Vorrichtung zur Erfassung biometrischer Daten (16) der zweiten wiederverwendbaren Schachtel erneut Daten bereitstellt, die der von der IT-Plattform übertragenen IT-Datei biometrischer Daten entsprechen.

8. System zum Versand von Objekten nach Anspruch 1, **dadurch gekennzeichnet, dass** es ein Smartphone (3) umfasst, das im Besitz eines Empfängers ist,
und dass das Smartphone (3), das im Besitz des Empfängers ist, eine Vorrichtung zur Erfassung biometrischer Daten (16) integriert, wobei das Smartphone Long-Distance-Kommunikationsmitteln zugeordnet ist, die imstande sind, mit den zweiten Long-Distance-Kommunikationsmitteln (20) zu kommunizieren.

## Claims

1. A system for conveying objects, implementing:
- reusable boxes (1) intended to contain the objects (0) and each associated with at least one identification code (10), each reusable box integrating:
- electromechanical locking means (14) in a closed position of the reusable box;
- first long-distance communication means (11),
- an on-board computer unit (15),
- an IT platform (2) including a first database (21) relating to the reusable boxes (1) listing the identification codes (10) of all the reusable boxes, the IT platform (2) also including a second database (22) relating to recipients of the reusable boxes, and including second long-distance communication means (20) able to communicate with the first long-distance communication means (11) of the reusable boxes (1),
**characterized in that** the system implements at least one biometric data capture device (16) accessible from outside a reusable box (1), each biometric data capture device (16) being associated with long-distance communication means able to communicate with the second long-distance communication means (20),
and **in that** the IT platform (2) is parameterized to:
- receive at least one digital biometric data file via the biometric data capture device (16) and long-distance communication means,
- record, in the second database (22), the digital biometric data file by associating it with said recipient,
- subsequently record a request for delivery of another reusable box, called a second reusable box, to said recipient,
- transmit the digital biometric data file(s) to the on-board computer unit (15) of the second reusable box,
the second reusable box carrying a biometric data capture device (16) and the on-board computer unit (15) being parameterized to issue an opening authorization instruction if the biometric data capture device (16) of the second reusable box provides data conforming to the digital biometric data file transmitted by the platform (2).

2. The object conveying system according to claim 1, **characterized in that** it comprises a Smartphone (3) held by a recipient and **in that** the IT platform (2) is parameterized to issue an opening code for the Smartphone (3) held by the recipient and for the on-board computer unit (15) of the reusable boxes (1), the reusable boxes (1) having code entry means (17) accessible from outside the reusable box (1), the on-board computer unit (15) being parameterized to authorize the opening of the reusable box if the code entered on the code entry means is identical to the one sent by the IT platform (2) to the on-board computer unit (15).

3. The object conveying system according to any of claims 1 and 2, **characterized in that** the biometric data capture devices (16) belong to the following group:
- device for capturing fingerprints;
- device for capturing a facial image;
- device for capturing an iris image;
- device for capturing a vein image;
- device for recording a voice.

4. The object conveying system according to any one of the preceding claims, **characterized in that** it comprises a Smartphone (3) held by a delivery person and **in that** the IT platform (2) is parameterized to transmit to the Smartphone (3) held by the delivery person:
- the digital biometric data file;
- an instruction requesting the capture of biometric data via a computer application for capturing biometric data from the Smartphone held by the delivery person;
- a delivery authorization instruction if the computer application for capturing biometric data from the Smartphone held by the delivery person provides data conforming to the digital biometric data file transmitted by the platform.

5. The object conveying system according to any one of the preceding claims, **characterized in that** the IT platform (2) is parameterized to receive a second digital biometric data file from a representative of the recipient via the biometric data capture device (16) and the first long-distance communication means (11) of a reusable box.

6. The object conveying system according to claim 5, **characterized in that** the IT platform (2) is parameterized to transmit to the on-board computer unit (15) of the second reusable box:
- the second digital biometric data file;
- an instruction requesting the capture of biometric data via the biometric data capture device (16) of the second reusable box;
- an opening authorization instruction if the biometric data capture device (16) of the second reusable box provides data conforming to the second digital biometric data file transmitted by the IT platform (2).

7. The object conveying system according to any one of the preceding claims, **characterized in that** the reusable boxes (1) have a digital screen (19), the on-board computer unit (15) of the reusable boxes being connected to the digital screen to transmit to it display instructions relating to shipping addresses,
and **in that** the on-board computer unit (15) is parameterized to authorize receipt of a new shipping instruction if the biometric data capture device (16) of the second reusable box again provides data conforming to the digital biometric data file transmitted by the IT platform.

8. The object conveying system according to claim 1, **characterized in that** it comprises a Smartphone (3) held by a recipient,
and **in that** the Smartphone (3) held by the recipient integrates a biometric data capture device (16), the Smartphone being associated with long-distance communication means able to communicate with the second long-distance communication means (20) .
